# EUROPEAN PATENT APPLICATION

(11) **EP 1 703 420 A1**
(43) Date of publication of application: **20.09.2006**
(21) Application number: 05005942.7
(22) Date of filing: 18.03.2005
(51) Int. Cl.: G06F 17/30

(54) **A data processing system and method**

(71) Applicant: SAP AG, 69190 Walldorf (DE)
(72) Inventor: Junginger, Bernd, no.129 Phase II, Ramagondanahalli, 56000 Bangalore-Karnat (IN); Rapp, Roman, 06600 Antibes (FR); Von Zimmermann, Peter, 74918 Angelbachtal (DE); Liebich, Gunther, 69190 Walldorf (DE)
(74) Representative: Richardt, Markus Albert

(57) **Abstract**

The present invention relates to a data processing system comprising:
- interface means (102) for coupling to a plurality of data warehouses (104, 106, 108,...), each of the data warehouses having key figures field catalogues (112, 116, 120,...) and characteristics field catalogues (114, 118, 122,...),
- means (112) for selecting a sub-set of the plurality of data warehouses,
- means (112) for selecting at least one of the key figures field catalogues and characteristics field catalogues of a previously selected one of the data warehouses,
- means (114) for storing data indicative of the selected sub-set and the selected at least one key figures field catalogue and characteristics field catalogue for definition of a data domain (120).

## Description

### Field of the invention

The present invention relates to the field of data processing, and more particularly without limitation to the field of data warehouses.

### Background and prior art

Data warehouses are commonly used as the foundation of decision support systems (DSS). Typically, a data warehouse is implemented as a data processing system that is physically distinct from an online operational data processing system, such as an online transaction processing system (OLTP). In contrast to an OLTP that serves for processing of operational information to support the daily operations of a business, a data warehouse is designed for the processing of informational information for management information and/or decision support purposes.

### Summary of the invention

In accordance with the present invention there is provided a data processing system comprising interface means for coupling to a plurality of data warehouses, each of the data warehouses having key figures field catalogues and characteristics field catalogues, means for selecting a sub-set of the plurality of data warehouses, means for selecting at least one of the key figures field catalogues and characteristics field catalogues of a previously selected one of the data warehouses, and means for storing data indicative of the selected sub-set and the selected at least one key figures field catalogue and characteristics field catalogue for definition of a data domain.

The present invention is particularly advantageous as it facilitates the definition of a data domain that can span over various data warehouses. The data domain can be used to define one or more databases where each databases contains a sub-set of the data contained in the data domain. Databases can be used to define object types, attribute types and/or cost component split types. These type definitions enable a user to specify a desired level of granularity of a data drill-down analysis and in particular the dimensions of the analysis.

In accordance with an embodiment of the invention a user can select a component split type by means of a graphical user interface, such as by selecting a menu item from a pull-down menu that represents a desired component split type.

In another aspect the present invention relates to a data processing method for defining a data domain that spans multiple data warehouses. Such a data domain can be used as a foundation for the definition of one or more databases. The databases can be used to define object types, attribute types and/or component split types in order to facilitate the specification of a desired level of granularity and the dimensions of a drill-down data analysis.

In still another aspect the present invention relates to a computer program product implementing such a data processing method.

In still another aspect the present invention relates to a graphical user interface operable to receive of a user's selection of a symbol being representative of an object type instance of one of the object types, display object type instance symbols belonging to the selected object type in response to the user's selection, display of key figures of the selected object type, receive a user's selection of one of the displayed key figures, and receive a user's selection of a cost component split type being assigned to the selected key figure.

Such a graphical user interface is particularly advantageous for a non-expert user during the run-time of the data processing system.

### Brief description of the drawings

In the following preferred embodiments of the invention will be described by way of example only making reference to the drawings in which:
- Figure 1: is a block diagram of a data processing system,
- Figure 2: is a flowchart illustrating the definition of a business domain,
- Figure 3: is a flow diagram illustrating the definition of a database,
- Figure 4: is a flowchart illustrating the definition of object types,
- Figure 5: is a flowchart illustrating the definition of attribute types,
- Figure 6: is a flowchart illustrating the definition of cost component split types,
- Figure 7: is a flow diagram illustrating the usage of a graphical user interface for performing a data analysis,
- Figure 8: is an embodiment of a window generated by the graphical user interface.

### Detailed description

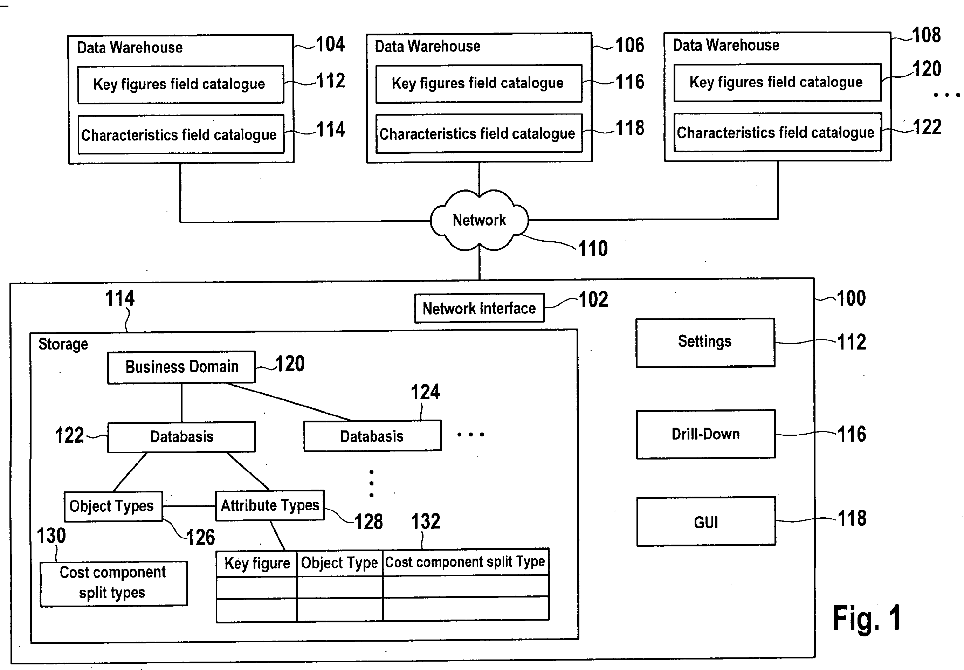

Fig. 1 shows a data processing system 100 that has a network interface 102 for coupling to data warehouses 104, 106, 108, via a network 110.

Each of the data warehouses 104, 106, 108, has one or more key figures field catalogues and characteristics field catalogues. For example, the data warehouse 104 has the key figures field catalogue 112 and the characteristics field catalogue 114; the data warehouse 108 has key figures field catalogue 116 and characteristics field catalogue 118; the data warehouse 108 has key figures field catalogue 120 and characteristics field catalogue 122, etc. Each of the key figures field catalogues and the characteristics field catalogues provides a directory of key figures and characteristics, respectively, of the respective data warehouse.

Typically, key figures are used to describe any kind of numeric information from the business process level, such as an amount, a quantity, a number, an integer, date or time.

Characteristics are typically used to describe the objects dealt with in business processes. These can be anything from core business objects like customers, products, and accounts to simple attributes like color, zip codes, and status. While key figures - from a database point of view - simply describe a single field in a database table, characteristics can be more complex. The description of a characteristic includes a field description as it does for key figures, but it may also include the description of a complete set of master data tables storing attributes, text, and keys associated to that field.

Preferably, the data warehouses 104, 106, 108, are implemented by means of the SAP Business Information Warehouse (BW) product that is commercially available from

SAPAG, Walldorf, Germany.

The data processing system 100 has a program component 112 for entry of settings that specify how the data warehouses 104, 106, 108, are logically linked. The resultant settings and definitions are stored in the storage 114 of the data processing system 100.

The data processing system 100 has a program component 116 for drill-down analysis of data in accordance with dimensions that have been previously defined by means of program component 112.

The data processing system 100 has a graphical user interface 118 in order to facilitate a user's interaction with the data processing system 100 regarding the entry of settings by means of program component 112 and/or for the purpose of performing a data analysis by means of program component 116.

It is to be noted that the program component 112 is typically used by an expert user whereas the program component 116 is used during the run-time of the data processing system 100 by a non-expert user such as for the purpose of management information and/or decision support.

In operation the program component 112 is started in order to select one of the data warehouses 104, 106, 108. One or more key figures field catalogues and characteristics field catalogues is selected from the selected data warehouse. The selection of one or more key figures field catalogues and characteristics field catalogues is done for each selected data warehouse of the data warehouses 104, 106, 108. The resultant set of data warehouses, key figures field catalogues and characteristics field catalogues defines the data domain that will typically be specific for a certain business purpose and is thus referred to in the following as a business domain 120.

The business domain 120 forms the foundation for defining the databasis 122. The databasis 122 specifies a sub-set of the data of the business domain 120. This sub-set is defined by selecting key figures and characteristics from the business domain 120. One or more additional databases 124, can be defined as sub-sets of the data covered by the business domain 120.

This selection process is carried out by means of program component 112. The program component 112 is also used to define object types 126 and attribute types 128 using the key figures and characteristics covered by the databasis 120. Likewise costs component split types 130 can be defined using the databasis 122. Cost component split types can be assigned to key figures contained in object types by means of a table 132 that can be accessed by means of program component 112. The table 132 is related to the attribute types 128. Each of the attribute types 128 can relate to one or more object types 126. After the entry of the definitions for the business domain 120, the databasis 120, 124, the object types 126, the attribute types 128, the cost component split types 130 and the table 132, the definition phase for specifying the data coverage, granularity and the dimensions for performing the data analysis is completed.

When the program component 116 is started to perform an analysis, the user can select one of the key figures via the graphical user interface 118 and one of the cost component split types assigned to the selected key figure in the table 132: In response the cost component split is performed as specified by the selected cost component split type.

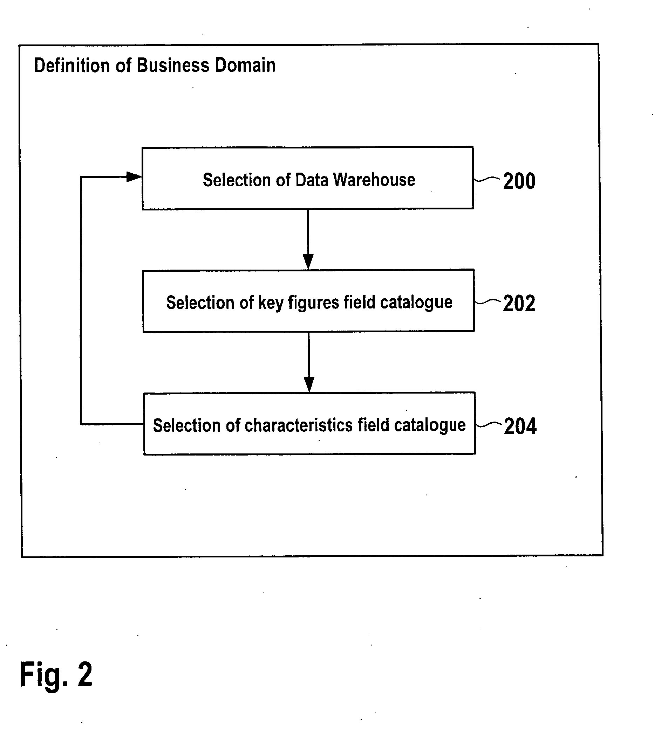

Fig. 2 shows a flowchart that illustrates the definition of a business domain (cf. business domain 120 of Fig. 1). In step 200 one of the data warehouses that are coupled to the data processing system is selected. In step 202 at least one of the key figures field catalogues of the selected data warehouse is selected. In step 204 at least one of the characteristics field catalogues of the selected data warehouse is selected. Those selections of the data warehouse, the key figures field catalogue(s) and the characteristics field catalogue(s) are stored in the storage (cf. storage 114) of the data processing system. After all selections of field catalogues have been made for the selected data warehouse, the steps 200 to 204 can be repeated for selection of one or more additional data warehouses and their respective field catalogues in order to complete the definition of the business domain.

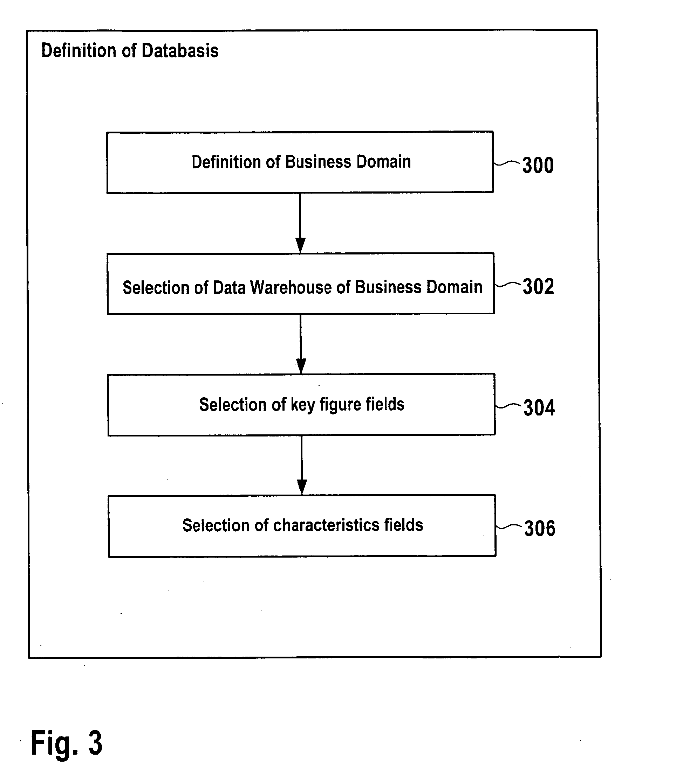

Fig. 3 illustrates the definition of a databasis (cf. databases 122 of Fig. 1). For definition of a databasis one of the previously defined business domains is selected in step 300. In step 302 one of the data warehouses that -is contained in the selected business domain is selected. In step 304 key figure fields of the selected data warehouse are selected and in step 306 characteristics fields of the selected data warehouse are selected.

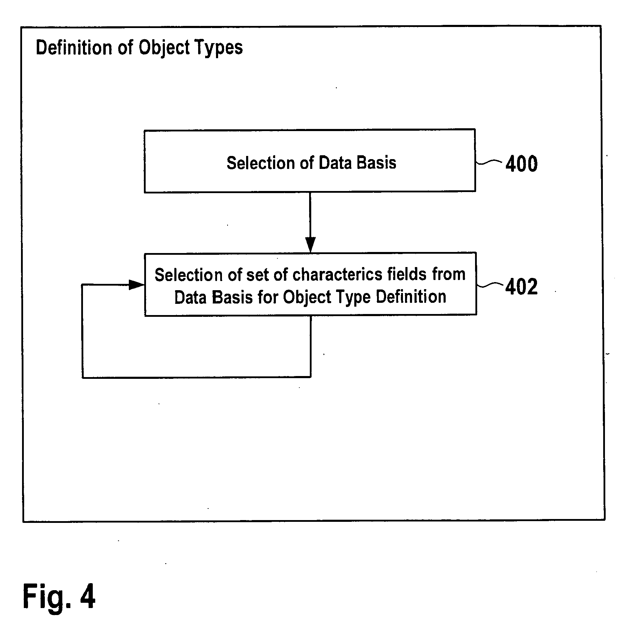

Fig. 4 illustrates the definition of object types (cf. object types 126 of Fig. 1). In step 400 a databasis is selected, such as the databasis 122 (cf. Fig. 1). In step 402 a set of characteristics fields is selected from the selected databasis. This constitutes an object type definition. The step 402 is performed for all object types to be defined.

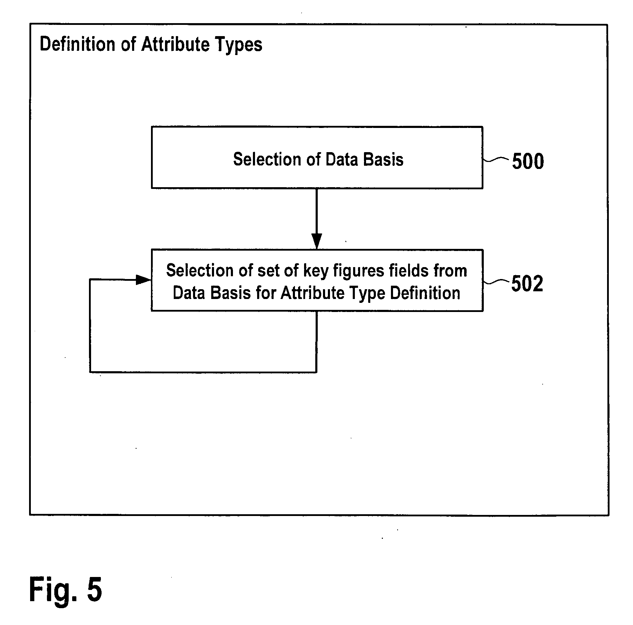

Fig. 5 illustrates the definition of attribute types (cf. attribute types 128 of Fig. 1). In step 500 one of the databasis is selected, such as the databases 122 (cf. Fig. 1). In step 502 a set of key figures fields is selected from the selected databases which constitutes an attribute type definition. Step 502 is carried out for all attribute types to be defined. An attribute type can be linked to one or more object types in order to complete the respective object types definitions.

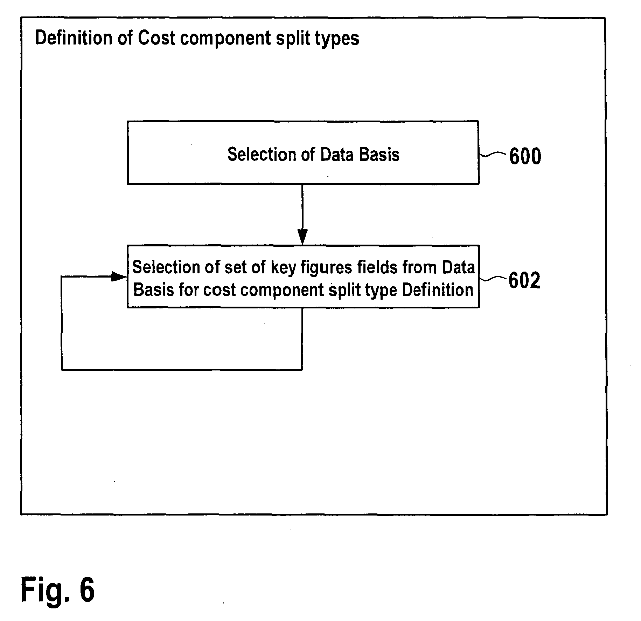

Fig. 6 shows a flowchart illustrating the definition of cost component split types. In step 600 one of the databasis is selected. In step 602 a set of key figures fields is selected from the selected databasis which constitutes a cost component split type definition. Step 602 is performed for each cost component split type to be defined. (cf. cost component split types130 of Fig. 1).

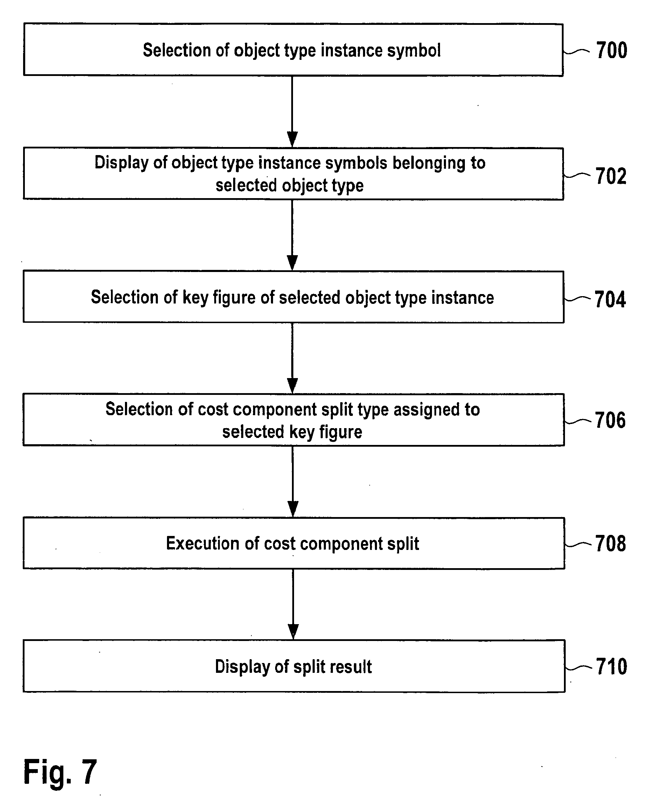

Fig. 7 shows a flowchart illustrating usage of the data processing system after the definition phase of Fig. 2 to 6.

In step 700 at least one symbol is displayed on the graphical user interface that represents an object type instance. In response to a user's selection of the object type instance symbol the object type instance symbols that belong to the selected object type are displayed in step 702. In step 704 a user selects one of the key figures of the object type instance that has been selected in step 700. In step 706 the user selects one of the cost component split types that are assigned to the key figure that has been selected in step 704. In step 708 the cost component split is executed and the split result is displayed in step 710.

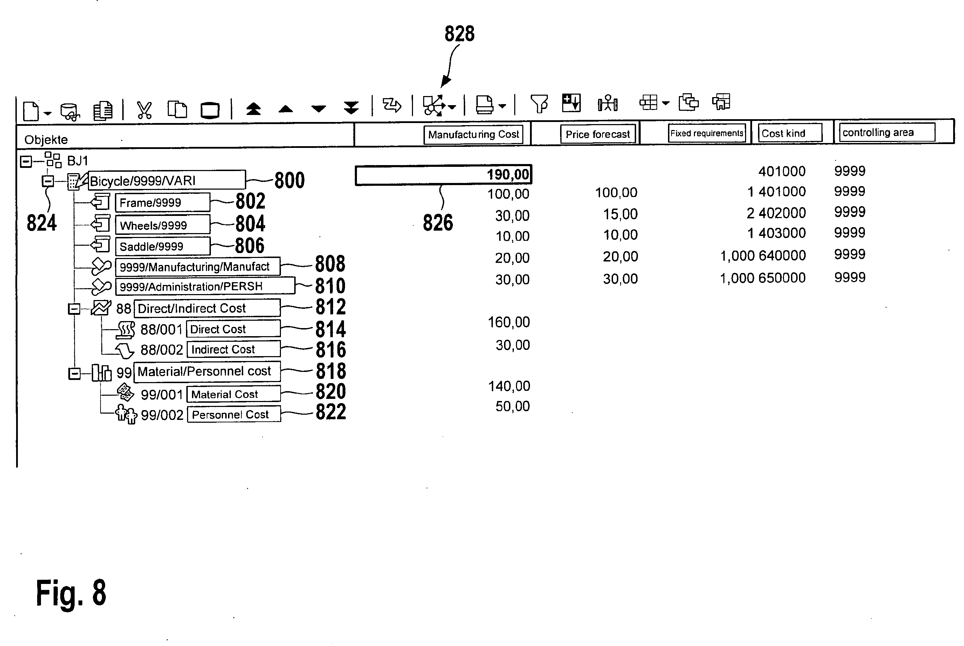

Fig. 8 shows a window that is generated by the graphical user interface (cf. graphical user interface 118 of Fig. 1). The window shows the performance of a data analysis in accordance with a selected cost component split type.

The symbol 800 represents an instance of an object type. In the example considered here the instance is a "bicycle". The instance "bicycle" consists of three materials, i.e. frame, wheels and saddle. This is represented by the symbols 802, 804 and 806 that represent respective object type instances.

The symbols 808 and 810 are representative of object type instances related to non-material cost: The symbol 808 represents the instance "manufacturing cost" and the symbol 810 represents the instance "administration cost".

The symbols 802 to 810 are displayed in the window when the user clicks on the expansion symbol 824.

These five objects 802 to 810 are sender objects that 'send' their respective costs to the only receiver object in this exemplary model, i.e. the instance "bicycle".

The user has selected one of the key figures of the selected object type instance, i.e. the key figure "manufacturing cost". This is illustrated on the graphical user interface by highlighting the selected key figure by means of the grey bar 126 as shown in Fig. 8.

After the selection of the key figure the user can click on the pull-down menu icon 828. Each menu item of the pull-down menu represented by the pull-down icon 828 represents a cost component split type that has been assigned to the selected key figure (cf. the assignment contained in the table 132 of Fig. 1). After selection of one of the cost component split types the respective cost component split is calculated, such as the split of direct and indirect cost as represented by symbols 812 to 816 or the split into material / personnel cost as represented by symbols 818 to 822.

Various splitting methods can be used for performing the cost splitting. For setting up a splitting method a component type can be defined. Next, the component split method itself can be defined. There can be multiple splitting methods per component type. For example, the characteristics and the rules used for the determination of a splitting method are defined per object type. Next, derivation characteristics can be selected that are used to determine a splitting method for a given object of the chosen object type. Further, determination rules can be defined in order to determine one of the splitting methods.

Likewise, derivation characteristics and the corresponding rules can be defined by means of a suitable sequence of user dialogues. For example, derivation characteristics are used to determine components of a given splitting method and derivation rules are defined for allocations. For example, the allocated values are assigned to different components on the receiver depending on the cost elements of the sender key figure.

The formulas used for the cost splitting in the example shown in Fig. 8 are set up in the following way: the 'price forecast' of each of the five sender objects multiplied with the 'fixed requirements' on each sender object results in the corresponding 'manufacturing cost'.

The total of the 'manufacturing cost' of the five sender objects is 190 currency units for the bicycle.

The window also shows the 'cost kind' and 'controlling area' on each sender object. Using these two characteristics on the sender object and suitable derivation rules the component splits are calculated as shown in Fig. 8.

It is to be noted that the present invention facilitates the aggregation via formulas. By default the component values are summed up to yield the aggregate value. However, an arithmetic formula editor can be used to define the aggregate value not only as a sum of its components but as a function of any arithmetic operations on its components.

### List of Reference Numerals

| | |
|---|---|
| 100 | Data processing system |
| 102 | Network interface |
| 104 | Data warehouse |
| 106 | Data warehouse |
| 108 | Data warehouse |
| 110 | Network |
| 112 | Program component |
| 114 | Storage |
| 116 | Program component |
| 118 | Graphical user interface |
| 120 | Business domain |
| 122 | Databasis |
| 124 | Databasis |
| 126 | Object type |
| 128 | Attribute type |
| 130 | Cost component split type |
| 132 | Table |
| 800 | Symbol |
| 802 | Symbol |
| 804 | Symbol |
| 806 | Symbol |
| 808 | Symbol |
| 810 | Symbol |
| 812 | Symbol |
| 814 | Symbol |
| 816 | Symbol |
| 818 | Symbol |
| 820 | Symbol |
| 822 | Symbol |
| 824 | Expansion symbol |
| 826 | Bar |
| 828 | Pull-down icon |

## Claims

1. A data processing system comprising:
- interface means (102) for coupling to a plurality of data warehouses (104, 106, 108,...), each of the data warehouses having key figures field catalogues (112, 116, 120,...) and characteristics field catalogues (114, 118, 122,...),
- means (112) for selecting a sub-set of the plurality of data warehouses,
- means (112) for selecting at least one of the key figures field catalogues and characteristics field catalogues of a previously selected one of the data warehouses,
- means (114) for storing data indicative of the selected sub-set and the selected at least one key figures field catalogue and characteristics field catalogue for definition of a data domain (120).

2. The data processing system of claim 1, further comprising means (112) for selection of a plurality of key figures fields and characteristics fields of the data domain (120) contained in the at least one key figures field catalogue and characteristics field catalogue of the data domain for definition of a databasis (122) of the data domain.

3. The data processing system of claim 2, further comprising means (112) for entering object type definitions (126), an object type being defined by selected characteristics fields corifained in the at least one characteristics field catalogue of the databasis.

4. The data processing system of claims 2 or 3, further comprising means (112) for entering attribute type definitions (128), an attribute type being defined by selected key figures fields of the at least one key figures field catalogue of the databasis, and means (112) for assigning a selected attribute type to a selected object type.

5. The data processing system of claim 4, further comprising means (112) for entering cost component split type definitions (130), a cost component split type being defined by selected key figures fields of the selected at least one key figures field catalogue of the databases, and means (112, 132) for assigning a selected cost component split type to one of the key figures fields.

6. The data processing system of claims 3, 4 or 5, further comprising:
- means (118) for a user's selection of a symbol (800) being representative of an object type instance of one of the object types,
- means (118) for displaying object type instance symbols (802, 804, 806, 808, 810) belonging to the selected object type in response to the user's selection,
- means (118) for displaying of key figures of the selected object type,
- means (118, 826) for selection of one of the displayed key figures,
- means (118, 828) for selection of a cost component split type being assigned to the selected key figure.

7. The data processing system of claim 6, the means for selection of the cost component split type comprising a pull-down menu, where each menu item is indicative of one of the cost component split types assigned to the selected key figure.

8. A data processing method comprising:
- coupling a plurality of data warehouses (104, 106, 108,...) to a data processing system (100), each of the data warehouses having key figures field catalogues and characteristics field catalogues,
- selecting a sub-set of the plurality of data warehouses,
- selecting at least one of the key figures field catalogues and characteristics field catalogues of a previously selected one of the data warehouses,
- storing data indicative of the selected sub-set and the selected at least one key figures field catalogue and characteristics field catalogue for definition of a data domain (120).

9. The data processing method of claim 8, further selecting a plurality of key figures fields and characteristics fields of the data domain (120) contained in the at least one key figures field catalogue and characteristics field catalogue of the data domain for definition of a databasis (122) of the data domain.

10. The data processing method of claim 9, further comprising entering object type definitions (126), an object type being defined by selected characteristics fields contained in the at least one characteristics field catalogue of the databasis.

11. The data processing method of claims 9 or 10, further comprising means (112) for entering attribute type definitions (128), an attribute type being defined by selected key figures fields of the at least one key figures field catalogue of the databasis, and means (112) for assigning a selected attribute type to a selected object type.

12. The data processing method of claim 11, further comprising entering cost component split type definitions (130), a cost component split type being defined by selected key figures fields of the selected at least one key figures field catalogue of the databases, and assigning a selected cost component split type to one of the key figures fields.

13. The data processing method of claims 10, 11 or 12, further comprising:
- selecting a symbol (800) being representative of an object type instance of one of the object types,
- displaying object type instance symbols (802, 804, 806, 808, 810) belonging to the selected object type in response to the user's selection,
- displaying of key figures of the selected object type,
- selecting of one of the displayed key figures,
- selecting of a cost component split type being assigned to the selected key figure.

14. The data processing system of claim 13, the means for selecting of the cost component split type comprising a pull-down menu, where each menu item is indicative of one of the cost component split types assigned to the selected key figure.

15. A computer program product comprising computer executable instructions for performing a method in accordance with any one of the preceding claims 8 to 14.

16. A graphical user interface operable to:
- receive of a user's selection of a symbol (800) being representative of an object type instance of one of a plurality of object types,
- display object type instance symbols (802, 804, 806, 808, 810) belonging to the selected object type in response to the user's selection,
- display of key figures of the selected object type,
- receive (826) a user's selection of one of the displayed key figures,
- receive (828) a user's selection of a cost component split type being assigned to the selected key figure.

17. The graphical user interface of claim 16, further comprising a pull-down menu (828), where each menu item is indicative of one of the cost component split types assigned to the selected key figure.

## Amended claims

### Amended claims in accordance with Rule 86(2) EPC.

**1.** A data processing system comprising:
- interface means (102) for coupling to a plurality of data warehouses (104, 106, 108,...), each of the data warehouses having key figures field catalogues (112, 116, 120,...) and characteristics field catalogues (114, 118, 122,...), said key figures field catalogues representing a directory of key figures of the respective data warehouse, wherein the key figures describe numeric information from a business process level, said characteristic field catalogue representing a directory of characteristics of the respective data warehouse, wherein the characteristics describe objects dealt with in business processes.
- means (112) for selecting a sub-set of the plurality of data warehouses,
- means (112) for selecting at least one of the key figures field catalogues and characteristics field catalogues of a previously selected one of the data warehouses,
- means (114) for storing data indicative of the selected sub-set of data warehouses and the selected at least one key figures field catalogue and characteristics field catalogue for definition of a data domain (120), said data domain being defined by the selected subset of data warehouses, the selected key figure field catalogues and selected characteristic field catalogues..

**2.** The data processing system of claim 1, further comprising means (112) for selection of a plurality of key figures fields and characteristics fields of the data domain (120) contained in the at least one key figures field catalogue and characteristics field catalogue of the data domain for definition of a databasis (122) of the data domain, said databasis of the data domain being defined by a subset of the data of the data domain.

**3.** The data processing system of claim 2, further comprising means (112) for entering object type definitions (126), an object type being defined by selected characteristics fields contained in the at least one characteristics field catalogue of the databasis.

**4.** The data processing system of claims 2 or 3, further comprising means (112) for entering attribute type definitions (128), an attribute type being defined by selected key figures fields of the at least one key figures field catalogue of the databasis, and means (112) for assigning a selected attribute type to a selected object type.

**5.** The data processing system of claim 4, further comprising means (112) for entering cost component split type definitions (130), a cost component split type representing a particular division of a total cost of an object into plural cost components of the object, said cost component split type being defined by selected key figures fields of the selected at least one key figures field catalogue of the databases, and means (112, 132) for assigning a selected cost component split type to one of the key figures fields.

**6.** The data processing system of claims 3, 4 or 5, further comprising:
- means (118) for a user's selection of a symbol (800) being representative of an object type instance of one of the object types,
- means (118) for displaying object type instance symbols (802, 804, 806, 808, 810) belonging to the selected object type in response to the user's selection,
- means (118) for displaying of key figures of the selected object type,
- means (118, 826) for selection of one of the displayed key figures,
- means (118, 828) for selection of a cost component split type being assigned to the selected key figure.

**7.** The data processing system of claim 6, the means for selection of the cost component split type comprising a pull-down menu, where each menu item is indicative of one of the cost component split types assigned to the selected key figure.

**8.** A data processing method comprising:
- coupling a plurality of data warehouses (104, 106, 108,...) to a data processing system (100), each of the data warehouses having key figures field catalogues and characteristics field catalogues, said key figures field catalogues representing a directory of key figures of the respective data warehouse, wherein the key figures describe numeric information from a business process level, said characteristic field catalogue representing a directory of characteristics of the respective data warehouse, wherein the characteristics describe objects dealt with in business processes,
- selecting a sub-set of the plurality of data warehouses,
- selecting at least one of the key figures field catalogues and characteristics field catalogues of a previously selected one of the data warehouses,
- storing data indicative of the selected sub-set of data warehouses and the selected at least one key figures field catalogue and characteristics field catalogue for definition of a data domain (120), said data domain being defined by the selected subset of data warehouses, the selected key figure field catalogues and selected characteristic field catalogues.

**9.** The data processing method of claim 8, further selecting a plurality of key figures fields and characteristics fields of the data domain (120) contained in the at least one key figures field catalogue and characteristics field catalogue of the data domain for definition of a databasis (122) of the data domain, said databasis of the data domain being defined by a subset of the data of the data domain.

**10.** The data processing method of claim 9, further comprising entering object type definitions (126), an object type being defined by selected characteristics fields contained in the at least one characteristics field catalogue of the databasis.

**11.** The data processing method of claims 9 or 10, further comprising means (112) for entering attribute type definitions (128), an attribute type being defined by selected key figures fields of the at least one key figures field catalogue of the databasis, and means (112) for assigning a selected attribute type to a selected object type.

**12.** The data processing method of claim 11, further comprising entering cost component split type definitions (130), a cost component split type representing a particular division of a total cost of an object into plural cost components of the object, said a cost component split type being defined by selected key figures fields of the selected at least one key figures field catalogue of the databases, and assigning a selected cost component split type to one of the key figures fields.

**13.** The data processing method of claims 10, 11 or 12, further comprising:
- selecting a symbol (800) being representative of an object type instance of one of the object types,
- displaying object type instance symbols (802, 804, 806, 808, 810) belonging to the selected object type in response to the user's selection,
- displaying of key figures of the selected object type,
- selecting of one of the displayed key figures,
- selecting of a cost component split type being assigned to the selected key figure.

**14.** The data processing system of claim 13, the means for selecting of the cost component split type comprising a pull-down menu, where each menu item is indicative of one of the cost component split types assigned to the selected key figure.

**15.** A computer program product comprising computer executable instructions for performing a method in accordance with any one of the preceding claims 8 to 14.

**16.** A graphical user interface operable to:
- receive of a user's selection of a symbol (800) being representative of an object type instance of one of a plurality of object types,
- display object type instance symbols (802, 804, 806, 808, 810) belonging to the selected object type in response to the user's selection,
- display of key figures of the selected object type,
- receive (826) a user's selection of one of the displayed key figures,
- receive (828) a user's selection of a cost component split type being assigned to the selected key figure, said cost component split type representing a particular division of a total cost of an object into plural cost components of the object.

**17.** The graphical user interface of claim 16, further comprising a pull-down menu (828), where each menu item is indicative of one of the cost component split types assigned to the selected key figure.
